# FASCICULE DE BREVET EUROPEEN

(11) **EP 1 799 391 B1**
(45) Date de publication et mention de la délivrance du brevet: **20.05.2009**
(21) Numéro de dépôt: 05802631.1
(22) Date de dépôt: 12.09.2005
(51) Int. Cl.: B23K 20/12, C22F 1/047, C22F 1/053

(54) **ELEMENT DE STRUCTURE SOUDE COMPRENANT AU MOINS DEUX PARTIES EN ALLIAGES D'ALUMINIUM PRESENTANT UN ETAT METALLURGIQUE DIFFERENT, PROCEDE DE FABRICATION D'UN TEL ELEMENT**
GESCHWEISSTES STRUKTURELEMENT MIT MINDESTENS ZWEI ALUMINIUMLEGIERUNGSTEILEN, DIE VERSCHIEDENE METALLURGISCHE ZUSTÄNDE HABEN, UND VERFAHREN ZUR HERSTELLUNG SOLCH EINES ELEMENTS
WELDED STRUCTURAL ELEMENT COMPRISING AT LEAST TWO ALUMINIUM ALLOY PARTS WHICH HAVE DIFFERENT METALLURGICAL STATES, AND METHOD OF PRODUCING SUCH A ELEMENT

(30) Priorité: 14.09.2004 US 609270 P
(43) Date de publication de la demande: 27.06.2007
(73) Titulaire: ALCAN RHENALU, 75116 Paris (FR)
(72) Inventeur: EHRSTROM, Jean-Christophe, F-38130 Echirolles (FR); GERARD, Henri, F-38640 Claix (FR)
(74) Mandataire: Fénot, Dominique
(86) Numéro de dépôt international: PCT/FR2005/002254
(87) Numéro de publication internationale: WO 2006/030123

(56) Documents cités:
- WO-A-98/58769
- WO-A-20/04104258
- US-A- 2 800 709
- US-A- 4 426 429
- US-A1- 2003 116 608
- US-A1- 2004 056 075

## Description

La présente invention concerne un élément soudé en alliage d'aluminium et plus particulièrement un élément de structure soudé comprenant deux ou plus de deux parties dans des états métallurgiques différents un procédé de fabrication d'un élément de structure comprenant au moins deux parties en alliage d'aluminium (voir revendications 1 et 20 respectivement et US 2003/116608). Ces éléments de structure peuvent être utilisés, par exemple, dans la construction aéronautique.

### Etat de la technique

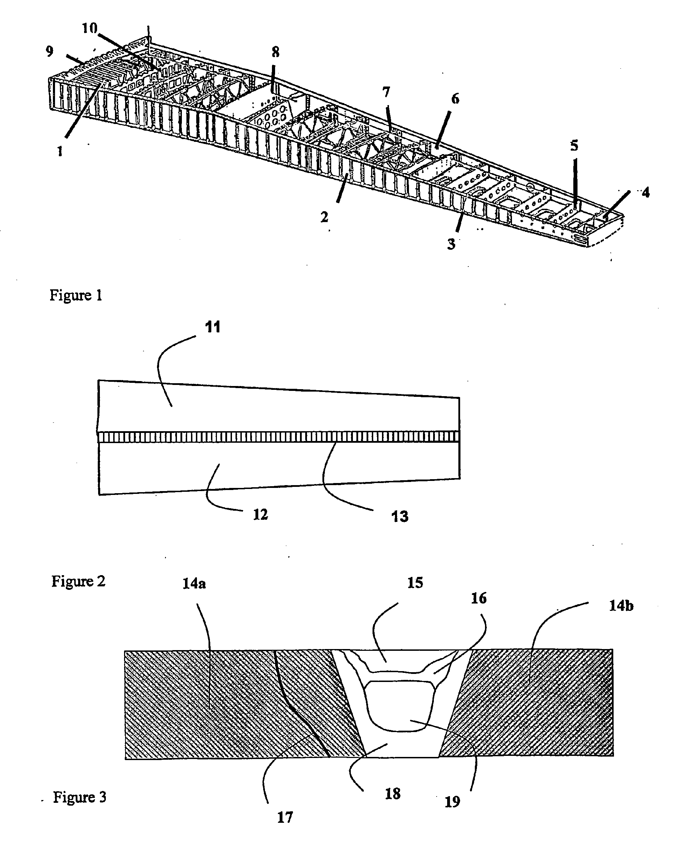

Il est généralement connu que, lors de la fabrication de produits semi-finis et d'éléments structuraux pour la construction aéronautique, certaines propriétés requises ne peuvent généralement pas être optimisées simultanément indépendamment les unes des autres. Tel est parfois le cas des propriétés rassemblées sous le terme « résistance mécanique statique » (notamment la résistance à la rupture Rₘ et la limite d'élasticité R_{p0,2}) d'une part, et des propriétés rassemblées sous le terme « tolérance aux dommages » (notamment la ténacité et la résistance à la propagation des fissures) d'autre part. Pour chaque utilisation envisagée d'un élément de structure, un compromis approprié entre les propriétés mécaniques statiques et les propriétés de tolérance aux dommages doit d'être recherché. Celui-ci est désigné ici par « compromis de propriétés ». Des propriétés additionnelles, telles que la résistance à la corrosion, peuvent être incluses dans le compromis de propriétés, si nécessaire, et dans certains cas, il peut même être nécessaire de définir un compromis entre deux ou plus de deux propriétés dans le groupe de propriétés désigné par «résistance mécanique statique » ou « tolérance aux dommages », telles que la limite d'élasticité et l'allongement qui tendent à être incompatibles. Le besoin d'optimiser le compromis de propriétés est particulièrement important pour certaines parties ou éléments structuraux pour lesquels les meilleurs résultats pourraient être obtenus si la résistance mécanique statique était optimisée sur une extrémité géométrique et la tolérance aux dommages était optimisée sur l'autre extrémité géométrique. Typiquement, en construction aéronautique, les panneaux supérieurs de voilure (extrados) sont optimisés pour la résistance mécanique statique et les panneaux inférieurs de voilure (intrados) sont optimisés pour la tolérance aux dommages. Pendant les quelques dernières années, de nouveaux alliages ont été développés pour les panneaux d'extrados et intrados et la différence des propriétés entre ces panneaux devient de plus en plus prononcée. Dans les longerons, qui sont raccordés tant à l'extrados qu'à l'intrados, il serait d'un grand intérêt d'optimiser la partie supérieure pour les propriétés mécaniques statiques et la partie inférieure pour la tolérance aux dommages. Toutefois, les longerons qui sont fabriqués, pour des structures intégrales non soudées, à partir d'un alliage dans un état métallurgique, un choix doit être fait, et actuellement le 7040 dans l'état T76 ou T74 est typiquement choisi pour tirer profit du compromis entre la limite élastique et la ténacité offert par cet alliage. Afin d'optimiser séparément la partie supérieure et la partie inférieure, par exemple, d'un longeron, il a été proposé de le fabriquer à partir de deux matériaux différents. Une structure assemblée mécaniquement peut être réalisée mais elle est coûteuse. Il a été proposé d'assembler la structure par soudage. La figure 2 illustre un tel assemblage pour un longeron.

Parmi les techniques de soudage, on peut distinguer deux familles principales. Dans les procédés de soudage par fusion, tels que le soudage par point, le soudage par étincelage, le soudage laser, le soudage à l'arc, le soudage par faisceau d'électrons, la soudure est réalisée au-dessus du point de fusion des pièces à souder, dans la phase liquide. Dans le soudage par friction, où un déplacement relatif des parties à souder génère de la chaleur pour l'assemblage, ou dans le soudage par friction-agitation, où un outil rotatif non consommable se déplace le long de l'assemblage entre les deux composants pour générer de la chaleur, la soudure est réalisée en dessous du point de fusion, en phase solide.

Quelle que soit la technique de soudage utilisée, de la chaleur est générée et le soudage a habituellement un effet défavorable sur les propriétés des différents matériaux en diminuant la résistance mécanique dans la soudure et dans la zone adjacente à la soudure désignée ici comme zone affectée thermiquement (ZAT). Toutefois, les techniques de soudage se comportent bien différemment et de nombreux alliages, tels que la plupart des alliages d'aluminium de la série 2XXX et 7XXX, qui ne peuvent pas être soudés de manière fiable par lesdites techniques de soudage par fusion peuvent être assemblés par soudage par friction ou soudage par friction-agitation.

Le document WO 98/58 759 (British Aerospace) décrit un procédé destiné à former des composants aéronautiques en assemblant deux éléments par soudage par friction-agitation. Les composants structuraux aéronautiques tels que les panneaux de revêtement de voilure, les longerons et les nervures peuvent être obtenus par ledit procédé. Des billettes hybrides d'alliage d'aluminium comprenant par exemple un alliage de la série 7000 assemblées bout à bout par soudage par friction-agitation à un alliage de la série 2000 sont décrites. Toutefois, aucune indication n'est fournie dans cette demande de brevet sur la manière de résoudre les difficultés métallurgiques associées au soudage par friction-agitation d'alliages d'aluminium à durcissement structural. En particulier, la faible résistance mécanique et la faible résistance à la corrosion de la zone affectée thermiquement n'y sont pas considérées.

Le document US 6 168 067 (McDonnell Douglas Corporation) enseigne un procédé pour réduire la dégradation de propriétés des matériaux pendant le soudage par friction-agitation. En particulier, l'opération de soudage par friction-agitation est réalisée après mise en solution et trempe et avant revenu. Les alliages d'aluminium et de zinc ne sont pas mentionnés comme exemples d'alliages binaires ou ternaires utiles pour l'invention. Le brevet ne mentionne pas la possibilité d'assembler des éléments de différents alliages ou des éléments du même alliage dans différents état métallurgiques. Le traitement thermomécanique réalisé avant assemblage est le même pour les deux parties à assembler. Le revenu avant assemblage des pièces par soudage par friction-agitation n'est pas mentionné, les éléments structuraux sont dans un état de non équilibre pendant l'opération de soudage par friction-agitation.

Le document EP 0 995 511 (Alcoa) décrit comment assembler des couches superposées de matériaux avant une déformation combinée. Les moyens destinés à attacher les matériaux ont pour objectif de maintenir le positionnement lors d'une déformation combinée, ce qui est un objectif différent de la présente invention.

Le document US 2004/0 056 075 (Universal Alloys) décrit un procédé pour améliorer les propriétés de résistance mécanique dans la zone affectée thermiquement et dans la zone de soudure. Les éléments en alliage d'aluminium à durcissement structural destinés au soudage sont soumis aux étapes suivantes : une première étape de revenu, une étape de soudage et une seconde étape de revenu. Les éléments à assembler sont constitués du même alliage d'aluminium et subissent le même premier traitement de revenu avant soudage. La demande de brevet n'aborde pas les problèmes particuliers liés à l'assemblage d'éléments de différents alliages ou d'éléments du même alliage dans des états métallurgiques différents.

Dans le document US 6 802 444 (NASA), une solution pour améliorer le traitement thermique des matériaux assemblés par soudage par friction-agitation est proposée. L'alliage d'aluminium et de zinc est tout d'abord mis en solution, puis refroidi à l'air jusqu'à la température ambiante, puis assemblé par soudage par friction-agitation, puis mis en solution pour une seconde fois, puis trempé et enfin revenu.

Dans le document JP 2000-237 882 (Sky Aluminium), le soudage par friction-agitation est utilisé pour assembler des alliages d'aluminium superplastiques tels qu'un alliage Al-Mg, un alliage Al-Zn-Mg, un alliage Al-Zn-Mg-Cu, un alliage Al-Cu, un alliage Al-Li, un alliage Al-Mg-Si, un alliage Al-Si, et une taille de grain limitée, de préférence inférieure ou égale à 30 µm, est obtenue. Les traitements thermiques réalisés sont spécifiques aux alliages d'aluminium superplastiques.

Il existe clairement un besoin pour un procédé capable de fournir une solution au problème, désigné ci-après par « le problème », qui consiste à souder deux ou plus de deux parties en alliage d'aluminium ayant différents compromis de propriétés, telles que les propriétés mécaniques statiques et/ou la tolérance aux dommages et/ou la résistance à la corrosion, sans dégrader significativement ces propriétés dans la soudure, dans la zone affectée thermiquement ou dans les zones qui ne sont pas affectées par le soudage.

### Objet de l'invention

Un objet de l'invention est d'obtenir un élément de structure comprenant au moins deux parties en alliage d'aluminium présentant différents compromis de propriétés. Lesdites parties en alliage d'aluminium sont assemblées par soudage. Afin d'éviter la dégradation desdites propriétés des parties en alliage d'aluminium, l'une des au moins deux parties a été pré-revenue avant d'être soudée, et l'élément de structure a subit un revenu post-soudage conférant un état métallurgique final à chacune desdites au moins deux parties. Conformément à l'invention, afin d'obtenir au moins deux parties ayant différents compromis de propriétés, une desdites au moins deux parties est choisie dans un état métallurgique initial différent de l'autre desdites au moins deux parties, voir revendication 1.

Un autre objet de la présente invention consiste à proposer un procédé de fabrication d'un élément de structure comprenant le soudage d'au moins deux parties en alliage d'aluminium présentant différents compromis de propriétés, voir revendication 20.

### Description des figures

La figure 1 montre une conception typique d'aile d'avion. (1) : panneau extrados, (2) : longeron avant, (3) : panneau intrados, (4) : extrémité de réservoir, (5) : nervure de type plaque, (6) : longeron arrière, (7) : nervure en treillis, (8) : nervure de type plaque, (9) : nervure d'extrémité d'aile externe, (10) : nervure forgée.
La figure 2 montre une section transversale à travers un longeron de l'invention. (11) : partie supérieure, (12) : partie inférieure, (13) : soudure.
La figure 3 montre l'emplacement typique d'une fissure après l'essai de traction dans une section transversale à travers la zone de soudure obtenue par soudage par friction-agitation. (14a) : matériau avec la contrainte à la limite élastique la plus faible, (14b) : matériau avec la contrainte à la limite élastique la plus élevée, (15) : zone déformée plastiquement, (16) : zone affectée thermomécaniquement, (17) : fissure, (18) : zone affectée thermiquement, (19) : noyau.
La figure 4 montre une représentation du procédé de soudage par friction-agitation. (13) : soudure, (20) : côté avance, (21) : côté retrait, (22) : sens de rotation, (23) : sens de soudage, (24) : outil.
Figure 5 : tôle soudée dans des essais. (13) : soudure, (23) : sens de soudage, (25a) : premier matériau, (25b) : second matériau.
Figure 6: éprouvette de traction. (13): soudure, (18) : zone affectée thermiquement, (25a) : premier matériau, (25b) : second matériau.
Figures 7 à 9: organigrammes illustrant les étapes de fabrication d'un élément de structure selon différents modes de réalisation de la présente invention.

### Description de l'invention

### a) Définitions

Sauf mention contraire, toutes les indications relatives à la composition chimique des alliages sont exprimées en pourcent massique. La désignation des alliages suit les règles de THE ALUMINUM ASSOCIATION. Les états métallurgiques sont définis dans la norme européenne EN 515. La composition chimique d'alliages d'aluminium normalisés est définie par exemple dans la norme EN 573-3 ainsi que dans les publications de THE ALUMINUM ASSOCIATION. Ces règles, normes et publications sont connues de l'homme du métier. Sauf mention contraire, les caractéristiques mécaniques statiques, c'est-à-dire la résistance à la rupture Rₘ, la limite élastique R_{p0,2}, l'allongement à la rupture A et l'allongement sous force maximale Ag, sont déterminés par un essai de traction selon la norme EN 10002-1, l'endroit et le sens du prélèvement des éprouvettes étant définis dans la norme EN 485-1. Sauf mention contraire, les définitions données dans la norme européenne EN 12 258-1 s'appliquent.

On appelle ici « élément de structure » d'une construction mécanique une pièce mécanique dont la défaillance est susceptible de mettre en danger la sécurité de ladite construction, de ses utilisateurs, de ses usagers ou d'autrui. Pour un avion, ces éléments de structure comprennent notamment les éléments qui composent le fuselage (tels que la peau de fuselage (fuselage skin en anglais), les raidisseurs ou lisses de fuselage (stringers), les cloisons étanches (bulkheads), les cadres de fuselage (circumferential frames)), les ailes (tels que la peau de voilure (wing skin), les raidisseurs (stringers ou stiffeners), les nervures (ribs) et longerons (spars)) et l'empennage composé notamment de stabilisateurs horizontaux et verticaux (horizontal or vertical stabilisers), ainsi que les profilés de plancher (floor beams), les rails de sièges (seat tracks) et les portes. Une structure d'aile d'aéronef typique est montrée sur la figure 1.

Dans le cadre de cette description, une « structure intégrale » signifie la structure d'un élément d'aéronef qui a été conçue pour atteindre une continuité de matière sur la plus grande partie possible afin de réduire le nombre de points d'assemblage mécanique. Une structure intégrale peut être réalisée soit par usinage en profondeur, soit par l'utilisation d'éléments mis en forme par exemple par extrusion, forgeage ou moulage, ou par soudage d'éléments structuraux constitués d'alliages soudables. Une « structure assemblée mécaniquement» signifie une structure dans laquelle les tôles minces ou fortes en fonction de la destination de l'élément de structure (par exemple un élément de fuselage ou un élément d'aile) sont fixées, habituellement par rivetage, sur des raidisseurs et/ou des cadres (qui peuvent être fabriqués par usinage à partir de produits extrudés ou laminés).

La résistance à la corrosion par exfoliation a été déterminée par un essai de type EXCO selon la norme ATSM G34.

### b) Description détaillée de l'invention

Selon la présente invention, le problème est résolu en réalisant un pré-revenu sur l'une des parties à assembler pour obtenir un état métallurgique initial, en soudant ladite partie avec d'autres parties à assembler et en traitant thermiquement lors d'un revenu post-soudage l'élément de structure comprenant lesdites parties pour obtenir un état métallurgique final optimisé pour chaque partie. En réalisant un pré-revenu individuel et un revenu post-soudage personnalisé, il est possible de minimiser ou même d'éviter la dégradation de propriétés mécaniques statiques et/ou de tolérance aux dommages et/ou de résistance à la corrosion dans la zone affectée par le soudage et d'obtenir un état métallurgique optimisé dans la zone qui n'est pas affectée par le soudage.

Un élément de structure approprié selon l'invention comprend au moins deux parties en alliage d'aluminium présentant différents compromis de propriétés, lesdites au moins deux parties étant soudées et dans lequel l'une desdites parties est choisie dan un état métallurgique initial différent de l'autre desdites au moins deux parties, et dans lequel au moins l'une desdites au moins deux parties a été pré-revenue avant d'être soudée, et dans lequel ledit élément de structure a subi un revenu post-soudage conférant un état métallurgique final à chacune desdites au moins deux parties.

Dans un mode de réalisation de la présente invention, lesdites au moins deux parties sont adjacentes. Par adjacente, on veut dire que les au moins deux composants ont des bords ou des côtés en aboutement les uns avec les autres. Les assemblages adjacents comprennent, par exemple : côte à côte, assemblage bout à bout, assemblage avec recouvrement, au sommet l'un de l'autre, assemblage en T, assemblage en bord, assemblage en coin.

Dans un autre mode de réalisation de l'invention, lesdits différents compromis de propriétés entre lesdites au moins deux parties sont atteints en vertu d'au moins l'un de (i) la composition chimique desdites parties, (ii) les états métallurgiques initiaux desdites parties, et/ou (iii) le revenu post-soudage.

Par état métallurgique final, on veut dire l'état métallurgique obtenu après le revenu post-soudage, tel qu'il est le résultat du pré-revenu et du revenu post-soudage. Les états métallurgiques dans la portée de la présente invention comprennent, sans y être limités, les état métallurgiques T (traités thermiquement pour produire des état métallurgiques autres que F, O ou H) et même plus précisément les état métallurgiques T6, mis en solution puis revenus, les état métallurgiques T7 mis en solution et sur-revenus/stabilisés, et en particulier les états métallurgiques T73, T7351, T74, T7451, T76, T7651, T77, T7751, T79 et T7951, ou les état métallurgiques T8 et T851 mis en solution, écrouis, puis revenus sont d'un intérêt particulier pour la présente invention.

Par revenu post-soudage, on veut dire un traitement thermique de vieillissement artificiel dudit élément de structure soudé. Le revenu post-soudage sera conçu afin d'obtenir l'état métallurgique final souhaité desdites au moins deux parties. Le revenu post-soudage peut comprendre plusieurs étapes à diverses températures. Dans un mode de réalisation avantageux, lorsqu'une partie de l'élément de structure est en alliage 2XXX, la température la plus élevée du revenu post-soudage est comprise entre 150 °C et 200 °C, et préférentiellement entre 170 °C et 180 °C. Dans un autre mode de réalisation avantageux, lorsque l'élément de structure ne comprend que des alliages 7XXX, la température la plus élevée du revenu post-soudage est comprise entre 110 °C et 180 °C, et préférentiellement entre 140 °C et 160 °C. Ce revenu post-soudage permet une meilleure résistance en compression de l'alliage n'ayant pas été vieilli avant soudage, de même qu'une meilleure ténacité et un meilleur comportement à la corrosion de l'alliage qui a subit un pré-revenu avant soudage, ce dernier étant alors davantage vieilli.

Comme établi dans la description de l'art antérieur, certaines propriétés requises des composants structuraux ne peuvent pas être optimisées simultanément indépendamment les unes des autres. Ceci est particulièrement vrai pour les propriétés telles que les « propriétés mécaniques statiques » ou « résistance mécanique » (notamment la résistance à la rupture Rₘ et la limite d'élasticité R_{p0,2}) et la « tolérance aux dommages » (notamment la ténacité et la résistance à la propagation des fissures).

Dans un autre mode de réalisation de l'invention, au moins une partie est choisie de telle sorte que l'état métallurgique final de celle-ci confère des propriétés de résistance mécanique audit élément de structure et au moins une autre partie adjacente est choisie de telle sorte que l'état métallurgique final de celle-ci fournit une tolérance aux dommages audit élément de structure.

Concernant la composition chimique, les au moins deux parties en alliage d'aluminium peuvent être choisies à partir d'alliages d'aluminium de la même série ou de séries différentes, telles que par exemple les alliages 2XXX ou les alliages 7XXX. Les alliages 2XXX, qui peuvent être utilisés pour la présente invention, comprennent, sans y être limités, les 2014, 2022, 2023, 2024, 2026, 2027, 2050, 2056, 2098, 2099, 2139, 2196, 2224, 2324 et 2524. Les parties en alliage 2XXX présentent habituellement de bonnes propriétés de tolérance aux dommages et, telles quelles, sont utilisées dans des parties requérant de meilleures propriétés pour une contrainte en traction telles que les intrados. Les parties en alliage 7XXX, qui peuvent être utilisées pour la présente invention, comprennent, sans y être limitées, les 7010, 7040, 7050, 7150, 7250, 7055, 7056, 7068, 7049, 7140, 7149, 7249, 7349, 7449, 7075, 7175 et 7475. Les parties en alliage 7XXX présentent une haute résistance mécanique pour des états métallurgiques proches du pic et, telles quelles, sont utilisées dans des parties requérant de meilleures qualités pour une contrainte en compression telles que les extrados. Dans un état métallurgique différent, les parties en alliage 7XXX peuvent également présenter de bonnes propriétés de tolérance aux dommages. Dans un mode de réalisation préféré de la présente invention, ledit alliage 7XXX a été pré-revenu avant soudage. Dans un autre mode de réalisation de la présente invention, ladite partie en alliage 2XXX a été pré-revenue avant soudage.

La résistance mécanique et la tolérance aux dommages ne sont toutefois pas les seules propriétés qui sont difficiles à optimiser simultanément, c'est également le cas de la résistance mécanique et de la résistance à la corrosion sous contrainte et/ou exfoliante. Dans un autre mode de réalisation de la présente invention, au moins une partie est choisie de telle sorte que la composition chimique de celle-ci et/ou l'état métallurgique final de celle-ci confère une résistance mécanique audit élément de structure, et au moins une autre partie adjacente est choisie de telle sorte que la composition chimique de celle-ci et/ou l'état métallurgique final de celle-ci confère une résistance à la corrosion sous contrainte et/ou à la corrosion exfoliante.

L'homme du métier sait que la résistance à la corrosion sous contrainte et/ou à la corrosion exfoliante est souvent liée à l'état métallurgique. Plus précisément, il est décrit dans la norme EN515 que la résistance à la corrosion sous contrainte et que la résistance à la corrosion exfoliante s'améliorent, dans l'ordre T79 (et T7951), T76 (et T7651), T74 (etT7451), T73 (et T7351) avec T79 (et T7951) présentant la moins bonne résistance à la corrosion et T73 (et T7351) présentant la meilleure résistance à la corrosion.

Un autre objet de la présente invention est un procédé de fabrication d'un élément de structure comprenant au moins deux parties, lesdites au moins deux parties étant éventuellement dans un état métallurgique final différent, afin d'obtenir le meilleur compromis de performance de résistance à la corrosion et de résistance mécanique pour chaque partie de l'élément de structure.

Parmi les techniques de soudage connues telles que le soudage par point, le soudage par étincelage, le soudage laser, le soudage à l'arc, le soudage par faisceau d'électrons, le soudage par friction et le soudage par friction-agitation, le soudage par friction-agitation est utilisé dans le mode de réalisation le plus avantageux de la présente invention.

Le soudage par friction-agitation a été initié au début des années 1990 par TWI (The Welding Institute) au Royaume-Uni, et a été utilisé dans l'assemblage d'alliages d'aluminium. Son principe est d'obtenir une soudure sans faire fondre le métal, par un fort cisaillement du métal à l'aide d'un outil rotatif qui mélange les deux matériaux à assembler. La diminution de la contrainte d'écoulement est obtenue tout d'abord par un échauffement du métal par frottement d'un patin (« shoulder ») en surface du métal avant le déplacement de l'outil qui conduit de proche en proche au soudage. Le patin permet également de contenir le métal et de maintenir une pression en évitant l'éjection du métal en dehors de la zone soudée.

Il est connu que le procédé de soudage par friction-agitation permet d'éviter les problèmes de fissuration à chaud, ce qui permet notamment de souder des alliages considérés comme non soudables par fusion, comme par exemple les alliages 2xxx au magnésium ou les alliages 7xxx au cuivre, qui sont les alliages utilisés habituellement dans la construction aéronautique

Il est connu que la structure métallurgique à l'intérieur et autour de la zone soudée par friction-agitation offre un faciès très caractéristique et nettement différent de celui d'une soudure par fusion. En dehors des zones éloignées de la soudure qui restent totalement non affectées, on peut distinguer 3 zones distinctes, comme indiqué à la figure 3 :
- (19) la zone affectée par la déformation plastique la plus sévère est appelée le « noyau ». Pendant le soudage, la température peut atteindre 560 °C dans cette zone. La largeur du noyau est habituellement légèrement supérieure au diamètre de l'outil.
- (16) la deuxième zone sur chaque côté du noyau est la zone affectée thermomécaniquement, qui a été déformée dans une moindre mesure et qui, en fonction de l'alliage, peut présenter des signes de recristallisation.
- (15) la troisième zone au-dessus du noyau est appelée la « zone plastiquement déformée » et est formée par l'effet de rotation du patin de l'outil.
- (18) la zone affectée thermiquement (ZAT) entoure les zones précédentes sévèrement déformées et subit des transformations métallurgiques liées à la température accrue.

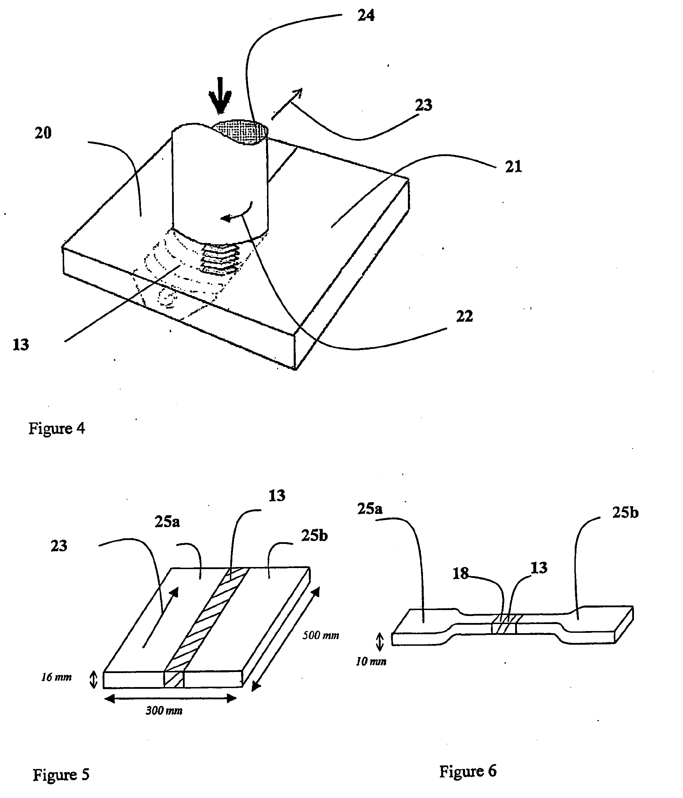

La figure 4 décrit une opération de soudage par friction-agitation. Le côté avance (20) est le côté où le sens local de la surface de l'outil dû à la rotation de l'outil et le sens de soudage (23) sont identiques. Le côté retrait (21) est le côté où le sens local de la surface de l'outil dû à la rotation de l'outil et le sens de soudage (23) sont opposés. La vitesse de rotation de l'outil est la vitesse à laquelle l'outil tourne dans le sens de rotation (22). La vitesse de soudure est la vitesse à laquelle l'outil se déplace le long du sens de soudage (23). Il a été découvert dans la présente invention que les deux côtés ne sont pas équivalents, spécialement lorsque différents alliages sont soudés ensemble, et que la partie placée du côté avance présente les résultats les moins bons en terme de résistance à la corrosion par exfoliation. Dans le cas où une partie en alliage 2XXX est assemblée à une partie en alliage 7XXX, les meilleurs résultats en terme de propriétés mécaniques statiques sont obtenus si la partie en alliage 2XXX est placée du côté avance. Dans le cas où une partie en alliage 7XXX est jointe à une autre partie en alliage 7XXX ayant des propriétés mécaniques statiques différentes, les meilleurs résultats sont obtenus si la partie en alliage 7XXX ayant la tension de rupture la plus élevée est placée du côté avance.

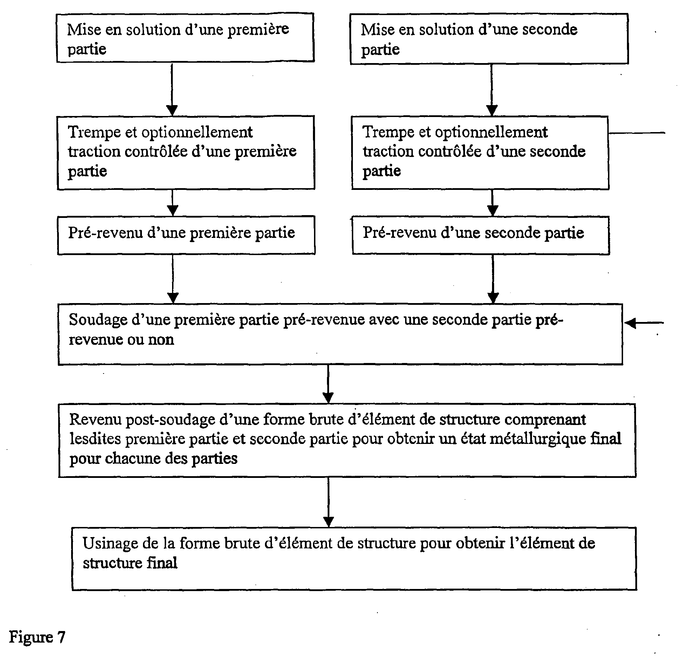

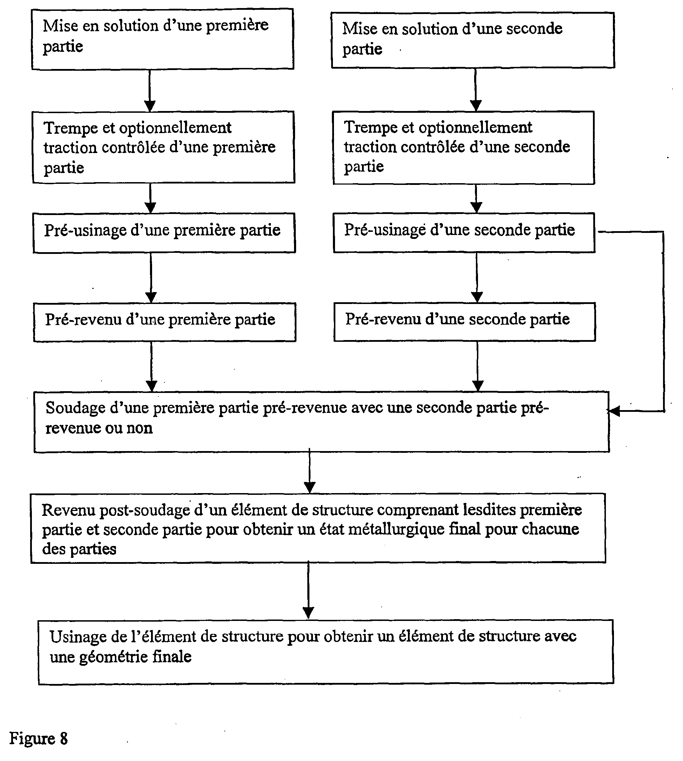

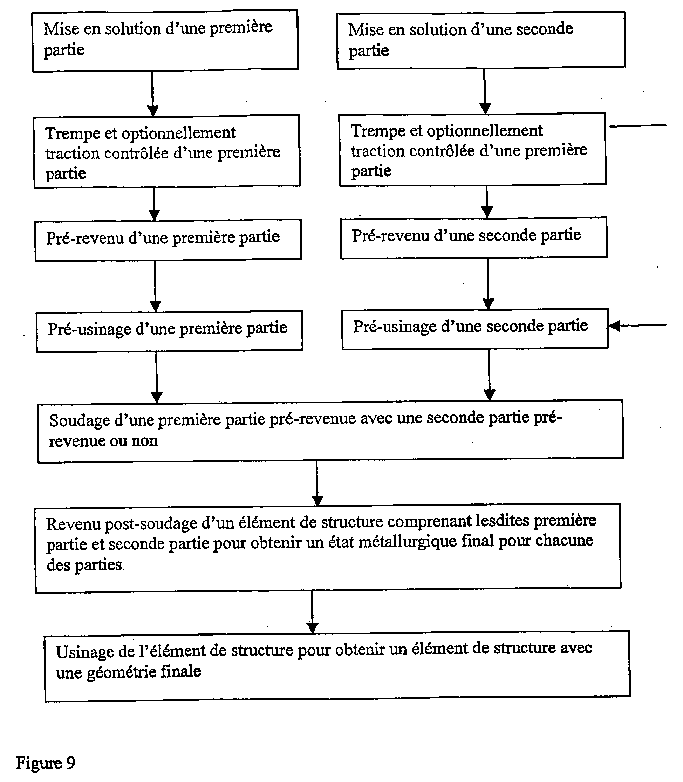

Sur la figure 7, il est montré une séquence d'étapes qui peuvent être utilisées pour l'invention. Dans ce mode de réalisation, une première partie pré-revenue et une seconde partie, éventuellement pré-revenue, sont soudées ensemble pour former une pièce brute d'élément de structure. Cette pièce brute est ensuite usinée jusqu'à sa forme finale. Dans un autre mode de réalisation de l'invention décrit sur la figure 8, une première étape de pré-usinage est réalisée après trempe et facultativement étirage et avant pré-revenu pour la au moins une partie qui est pré-revenue. Dans encore un autre mode de réalisation de l'invention décrit sur la figure 9, une première étape de pré-usinage est réalisée après pré-revenu et avant soudage pour la au moins une partie qui est pré-revenue.

Dans un mode de réalisation avantageux de la présente invention, l'élément de structure est utilisé dans une construction aéronautique, et comprend par exemple les éléments du fuselage (tels que la peau de fuselage), les raidisseurs ou lisses de fuselage, les cloisons étanches, les cadres de fuselage, les composants d'aile (tels que la peau de voilure, les raidisseurs, les nervures, les longerons, l'empennage (tel que les stabilisateurs horizontaux et verticaux), les profilés de plancher, les rails de siège et les portes. Les éléments de structure tels que les nervures et les longerons issu du procédé de la présente invention sont particulièrement avantageux. Dans un mode de réalisation préféré de la présente invention, une nervure ou un longeron comprend au moins une partie supérieure et une partie inférieure, dans lequel ladite partie supérieure comprend du 7449 à l'état T79 ou du 7449 à l'état T7951 et ladite partie inférieure comprend du 7040 à l'état T76 ou du 7040 à l'état T7651.

### Exemples

### Exemple 1 :

Dans cet exemple, on a réalisé un élément de structure comprenant deux parties du même alliage présentant des état métallurgiques différents. On a coulé des plaques en alliages d'aluminium 7449 et 7040 et la composition obtenue à partir de cette coulée est donnée dans le tableau 1.

**Tableau 1 : compositions chimiques (pour cent en poids)**

| Elément | Si | Fe | Cu | Mg | Cr | Zn | Ti | Zr |
|---|---|---|---|---|---|---|---|---|
| 7040 | 0,03 | 0,07 | 1,72 | 1,89 | 0,04 | 6,37 | 0,04 | 0,11 |
| 7449 | 0,05 | 0,07 | 1,94 | 2,15 | | 8,50 | 0,03 | 0,11 |

Les plaques de 7040 ont été homogénéisées à 475 °C, laminées à chaud jusqu'à une épaisseur de 100 mm, mises en solution à 480 °C, trempées et tractionnées de 3 %. Ce traitement aboutit à un état métallurgique W51. On a ensuite découpé les tôles résultantes aux dimensions souhaitées et certaines des parties obtenues ont subit un traitement de pré-revenu de 6 h à 120 °C suivi de 16 h à 155 °C aboutissant à un état métallurgique T7651. On a ensuite réalisé une première étape d'usinage sur les parties W51 et sur les parties T7651 afin d'obtenir des échantillons d'épaisseur 16 mm prêts pour le soudage.

Les plaques de 7449 ont été homogénéisées à 473 °C, laminées à chaud jusqu'à une épaisseur de 18 mm, mises en solution à 473 °C, trempées et tractionnées de 3 %. Ce traitement aboutit à un état métallurgique W51. On a ensuite découpé les tôles résultantes aux dimensions souhaitées et certaines parties obtenues ont reçu un traitement de pré-revenu de 24 h à 120° C suivi de 17 h à 150° C aboutissant à un état métallurgique T7951. On a ensuite réalisé une première étape d'usinage sur les parties W51 et sur les parties T7951 afin d'obtenir des échantillons d'épaisseur 16 mm prêts pour le soudage. Une limite élastique typique pour ces alliages est de 600 MPa pour le 7449 T7951 et de 500 MPa pour le 7040 T7651.

On a utilisé le soudage par friction-agitation comme procédé de soudage. On a fait varier deux paramètres associés à cette technique de soudage dans les essais : la position relative des parties par rapport à la rotation de l'outil (côtés avance et retrait) et la vitesse de soudage. Le soudage a été effectué sur une machine SuperStir® d'ESAB. On a effectué le réglage des paramètres de soudage par inspection visuelle des soudures, en d'autres termes une soudure sans aucun défaut profond ou de surface et avec un fini de surface satisfaisant était considérée comme conforme. On a soudé avec succès toutes les combinaisons, décrites dans le tableau 2, en dépit de la disparité de la contrainte d'écoulement à haute température.

Les paramètres de soudage ont été choisis à partir d'essais conduits dans une étude préliminaire. On a réalisé toutes les combinaisons à 230 tr/min (tours par minute) et on a essayé deux vitesses de soudage : 80 et 100 mm/min. Puisque l'on n'a observé aucun défaut visuel des soudures, on a caractérisé uniquement les soudures à « 100 mm/min ». On a effectué ce choix en gardant à l'esprit qu'un soudage à une vitesse plus élevée serait favorable tant pour les propriétés mécaniques, par minimisation de l'échauffement, que pour la productivité.

**Tableau 2 : description des assemblages et de conditions de revenu post-soudage**

| Référence d'éprouvette | Alliage/état métallurgique initial | | Revenu post-soudage | Alliage/état métallurgique final | |
|---|---|---|---|---|---|
| | Côté avance | Côté retrait | | Côté avance | Côté retrait |
| A | 7040-T7651 | 7040-W51 | 6h 120 °C + 16h 155 °C | 7040-T7451 | 7040-T7651 |
| B | 7449-T7951 | 7449-W51 | 17h 150°C + 17h 150°C | 7449-T7651 | 7449-T7951 |
| C | 7449-W51 | 7449-T7951 | 24h 120°C + 17h 150°C | 7449-T7951 | 7449-T7651 |

Comme décrit dans le tableau 2, on a appliqué un revenu post-soudage sur chaque combinaison avant essai mécanique. On a testé en traction toutes les soudures sur des éprouvettes prises à une épaisseur médiane et perpendiculairement à la soudure, comme montré sur les figures 5 et 6.

Au moins trois éprouvettes ont été testées pour chaque cas avec une bonne reproductibilité. Les niveaux de résistance mécanique obtenus sont proches pour toutes les combinaisons testées : entre 350 et 385 MPa. Les résultats sont montrés dans le tableau 3.

**Tableau 3 : propriétés mécaniques des joints soudés**

| Référence d'éprouvette | Rₘ | R_{p0,2} | Ag % | A % |
|---|---|---|---|---|
| | (MPa) | (MPa) | | |
| A | 270 | 365 | 2,49 | 3,80 |
| B | 290 | 383 | 2,35 | 3,03 |
| C | 288 | 379 | 2,10 | 2,68 |

On constate que la rupture se produit principalement mais non systématiquement du côté du joint où l'alliage a la limite d'élasticité la plus faible (voir figure 3). Ainsi, le 7040-T7451 cède avant le 7040-T7651 et le 7449-T7651 cède souvent avant le 7449-T7951. Le couple 7449-T7651/7449-T7951 (avance/retrait) a le même comportement que la combinaison opposée 7449-T7951/7449-T7651 (avance/retrait).

Pour l'évaluation de la corrosion exfoliante, on a immergé chaque combinaison pendant 48 h dans une solution préparée avec de l'eau désionisée et du NaCl (234 g/l), du KNO₃ (50 g/l) et du HNO₃ (6,3 ml/l) et on l'a maintenue constamment à 25° C ± 3° C. On a effectué une appréciation selon la norme ASTM G34, N signifiant aucune attaque, P signifiant une piqûre, PF signifiant une piqûre par exfoliation, EA signifiant une exfoliation superficielle, EB signifiant une exfoliation modérée, EC signifiant une exfoliation sévère et ED signifiant une exfoliation très sévère. Le tableau 4 donne les cotations des essais d'EXCO avant nettoyage.

Il est à noter qu'une zone intermédiaire entre la zone affectée thermiquement et le métal de base apparaît après nettoyage. Ces résultats montrent que le noyau et le métal de base ont une bonne performance au test EXCO, les cotations étant PF dans chaque cas. Concernant la zone affectée thermiquement, EB est typiquement obtenu excepté pour le 7449-T7651 (ED) dans le cas B.

Dans le cas de l'alliage 7449, la position de l'alliage (avance/retrait) semble avoir une influence sur les résultats en corrosion, les meilleurs résultats étant obtenus lorsque la partie en alliage d'aluminium ayant le plus faible sur-revenu (7449-T7951) et ainsi les propriétés mécaniques les plus élevées (Rₘ, R_{p0,2}) est placée du côté avance.

**Tableau 4 : résultats d'essai d'EXCO**

| Référence d'éprouvette | Côté avance | | | Côté retrait | | |
|---|---|---|---|---|---|---|
| | Métal base de base | ZAT | Noyau | | ZAT | Métal de base |
| A | 7040-T7451 | | | 7040-T7651 | | |
| | PF | EB | PF | | EB | PF |
| B | 7449-T7651 | | | 1 7449-T7951 | | |
| | PF | ED | PF | | EB | PF |
| C | 7449-T7951 | | | 7449-T7651 | | |
| | PF | EB | PF | EB | PF | PF |

### Exemple 2 :

Dans cet exemple, on a réalisé un élément de structure comprenant deux parties constituées de deux alliages différents. On a coulé des plaques en alliage d'aluminium 7449, 7040 et 2022 et la composition obtenue à partir de ces coulées est fournie dans le tableau 5.

**Tableau 5 : compositions chimiques (pour cent en poids)**

| Elément | Si | Fe | Cu | Mn | Mg | Zn | Ti | Zr |
|---|---|---|---|---|---|---|---|---|
| 7040 | 0,03 | 0,07 | 1,72 | - | 1,89 | 6,37 | 0,04 | 0,11 |
| 7449 | 0,05 | 0,07 | 1,94 | - | 2,15 | 8,50 | 0,03 | 0,11 |
| 2022 | 0,04 | 0,08 | 4,89 | 0,34 | 2,15 | - | 0,02 | - |

On a transformé les plaques d'alliage 7040 et 7449 comme décrit dans l'exemple 1. Les plaques d'alliage 2022 ont été réchauffées à 475° C, laminées à chaud jusqu'à une épaisseur de 40 mm, mises en solution à 530° C, trempées et tractionnées de 3 %. Ce traitement aboutit à un état métallurgique T351. On a ensuite découpé les tôles résultantes aux dimensions souhaitées et les parties obtenues ont subit un traitement de pré-revenu de 16 h à 173° C aboutissant à un état métallurgique T851. On a ensuite réalisé une première étape d'usinage afin d'obtenir des échantillons d'épaisseur 16 mm prêts à être soudés. Les revenus utilisés avant soudage visent à obtenir les meilleures propriétés des alliages une fois qu'on les a soudés et traités thermiquement par un revenu post-soudage. Les combinaisons retenues pour les essais sont présentées dans le tableau 6.

Les conditions de soudage étaient les mêmes que dans l'exemple 1. A nouveau, puisque l'on n'a observé aucun défaut visuel sur la surface des soudures, on a uniquement caractérisé les soudures obtenues à la vitesse de « 100 mm/min ».

**Tableau 6 : description des assemblages et des conditions de traitement thermique post-soudage**

| Référence d'éprouvette | Alliage-état métallurgique initial | | Revenu post-soudage | Alliage-état métallurgique final | |
|---|---|---|---|---|---|
| | côté avance | Côté retrait | | Côté avance | Côté retrait |
| D* | 7449-W51 | 7040-W51 | 6h 120°C + 16h 155°C | 7449-T1951 | 7040-T7651 |
| E | 2022-T851 | 7040-W51 | 7h 173°C | 2022-T851 | 7040-T7651 |
| F | 7040-W51 | 2022-T851 | 7h 173°C | 7040-T7651 | 2022-T851 |

| | | | | | |
|---|---|---|---|---|---|
| * Non couvert par la présente invention telle que définie dans les revendications | | | | | |

Bien que l'on ait observé certains défauts, on a testé en traction toutes les soudures sur des éprouvettes prises à l'épaisseur médiane et perpendiculaires à la soudure, comme montré sur les figures 5 et 6. Les propriétés mécaniques des joints soudés sont fournies dans le tableau 7.

**Tableau 7 : propriétés mécaniques des joints soudés**

| Référence d'éprouvette | R_{p0,2} | Rₘ | Ag % | A % |
|---|---|---|---|---|
| | (MPa) | (MPa) | | |
| D* | 275 | 367 | 2,21 | 2,70 |
| E | 230 | 353 | 4,14 | 4,94 |
| F | 249 | 371 | 4,27 | 5,22 |

| | | | | |
|---|---|---|---|---|
| * Non couvert par la présente invention telle que définie dans les revendications | | | | |

Une asymétrie apparaît dans les résultats du couple 2022/7040 en fonction de l'alliage qui est du côté avance. En effet, dans le cas où l'alliage 2022 est placé du côté retrait, les propriétés en traction sont significativement inférieures au cas où l'alliage 2022 est placé du côté avance. On a effectué des essais EXCO comme décrit dans l'exemple 1. Les résultats sont fournis dans le tableau 8.

**Tableau 8 : résultats d'essais de corrosion par exfoliation**

| Référence d'éprouvette | Côté avance | | | Côté retrait | | |
|---|---|---|---|---|---|---|
| | Métal de base | ZAT | Noyau | | ZAT | Métal de base |
| D* | 7449-T7951 | | | 7040-T7651 | | |
| | PF | EB | PF | | PF/EA | PF |
| E | 7040-T7651 | | | 2022-T851 | | |
| | EB/EC | EB/EC | P | | P | P |
| F | 2022-T851 | | | 7040-T7651 | | |
| | P | P | P | | EB/EC | EB/EC |

| | | | | | | |
|---|---|---|---|---|---|---|
| * Non couvert par la présente invention telle que définie dans les revendications | | | | | | |

Ces résultats montrent que le noyau a une bonne performance au test EXCO, les cotations étant P ou PF dans chaque cas. On observe également une bonne performance pour le métal de base, qui est PF excepté pour le 7040-T651 dans les cas E et F lorsqu'il couplé à l'alliage 2022. Concernant la zone affectée thermiquement, on obtient typiquement EB ou EB/EC excepté pour le 7040-T7651 (PF/EA) dans le cas D et le 2022 (P) dans les cas E et F.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention telle que définie dans les revendications.

## Revendications

1. Élément de structure comprenant au moins deux parties (11, 12) en alliage d'aluminium présentant différents compromis de propriétés, lesdites au moins deux parties étant soudées et dans lequel l'une desdites parties est choisie dans un état métallurgique initial différent de l'autre desdites au moins deux parties, et
dans lequel au moins l'une desdites au moins deux parties (11, 12) a été pré-revenue avant d'être soudée, et
dans lequel ledit élément de structure a subi un revenu post-soudage conférant un état métallurgique final différent tel qu'il est le résultat du pré-revenu et du revenu post-soudage à chacune desdites au moins deux parties.

2. Élément de structure selon la revendication 1, dans lequel lesdites au moins deux parties (11, 12) sont adjacentes.

3. Elément de structure selon la revendication 1 ou 2, dans lequel lesdits différents compromis de propriétés entre lesdites au moins deux parties sont atteints en vertu d'au moins l'un de (i) la composition chimique desdites parties, (ii) les états métallurgiques initiaux desdites parties et/ou (iii) le revenu post-soudage.

4. Élément de structure selon l'une quelconque des revendications 1 à 3, dans lequel au moins une partie (11, 12) est choisie de telle sorte que la composition chimique de celle-ci (11, 12) et/ou l'état métallurgique final de celle-ci (11, 12) confère des propriétés de résistance mécanique audit élément de structure, et au moins une autre partie adjacente (12, 11) est choisie de telle sorte que la composition chimique de celle-ci (12, 11) et/ou le revenu final de celle-ci (12, 11) confère une tolérance aux dommages audit élément de structure.

5. Élément de structure selon l'une quelconque des revendications 1 à 4, dans lequel au moins une partie (11, 12) est choisie de telle sorte que la composition chimique de celle-ci (11, 12) et/ou le revenu final de celle-ci (11, 12) confère une résistance mécanique audit élément de structure, et au moins une autre partie (12, 11) adjacente est choisie de telle sorte que la composition chimique de celle-ci (12, 11) et/ou le revenu final de celle-ci (12, 11) confère une résistance à la corrosion sous contrainte et/ou par exfoliation.

6. Elément de structure selon l'une quelconque des revendications 1 à 5, dans lequel lesdites parties (11, 12) sont soudées par soudage par friction-agitation (12).

7. Élément de structure selon l'une quelconque des revendications 1 à 6, dans lequel au moins deux desdites au moins deux parties (11, 12) sont en alliage 7XXX.

8. Élément de structure selon l'une quelconque des revendications 1 à 7, dans lequel au moins l'une desdites au moins deux parties (11, 12) est en alliage 2XXX et une autre desdites au moins deux parties est en alliage 7XXX.

9. Élément de structure selon l'une quelconque des revendications 7 à 8, dans lequel ledit alliage 7XXX est choisi dans le groupe constitué par 7040, 7349 et 7449.

10. Élément de structure selon l'une quelconque des revendications 7 à 9, dans lequel ladite partie en alliage 7XXX est pré-revenue.

11. Élément de structure selon l'une quelconque des revendications 8 à 10, dans lequel ladite partie en alliage 2XXX est pré-revenue.

12. Élément de structure selon l'une quelconque des revendications 8 à 11, dans lequel la partie en alliage 2XXX est placée côté avance.

13. Élément de structure selon l'une quelconque des revendications 7 à 11, dans lequel la partie en alliage 7XXX ayant la résistance à la rupture la plus élevée est placée côté avance.

14. Élément de structure selon l'une quelconque des revendications 1 à 13, dans lequel la température la plus élevée de revenu post-soudage est comprise entre 150 et 200° C.

15. Élément de structure selon l'une quelconque des revendications 1 à 13, dans lequel la température la plus élevée de revenu post-soudage est comprise entre 110 et 180 °C.

16. Élément de structure selon l'une quelconque des revendications 1 à 15, dans lequel la température la plus élevée de revenu post-soudage est comprise entre 170 et 180 °C.

17. Élément de structure selon l'une quelconque des revendications 1 à 13 ou 15, dans lequel la température la plus élevée de revenu post-soudage est comprise entre 140 et 160 °C.

18. Élément de structure selon l'une quelconque des revendications 1 à 17, dans lequel ledit élément de structure comprend un longeron ou une nervure appropriée pour une utilisation dans la construction aéronautique.

19. Élément de structure selon l'une quelconque des revendications 1 à 18, dans lequel ledit élément de structure comprend au moins une partie supérieure et une partie inférieure, dans lequel ladite partie supérieure comprend du 7449 T79 ou du T449 T7951 et ladite partie inférieure comprend du 7040 T76 ou du 7040 T7651 dans l'état métallurgique final.

20. Procédé de fabrication d'un élément de structure comprenant au moins deux parties (11, 12) en alliage d'aluminium présentant différents compromis de propriétés, lesdites au moins deux parties étant soudées et dans lequel l'une desdites parties (11, 12) est choisie dans un état métallurgique initial différent de l'autre (12, 11) desdites au moins deux parties (11, 12), et
dans lequel au moins l'une desdites au moins deux parties (11, 12) a été pré-revenue avant d'être soudée, et
dans lequel ledit procédé a subi un revenu post-soudage conférant un état métallurgique final différent tel qu'il est le résultat du pré-revenu et du revenu post-soudage à chacune desdites au moins deux parties.

21. Procédé selon la revendication 20, dans lequel lesdites au moins deux parties (11, 12) sont adjacentes.

22. Procédé selon la revendication 20 ou 21, dans lequel lesdits différents compromis de propriétés entre lesdites au moins deux parties sont atteints en vertu d'au moins l'un de (i) la composition chimique desdites parties, (ii) les états métallurgiques initiaux desdites parties et/ou (iii) le revenu post-soudage.

23. Procédé selon l'une quelconque des revendications 20 à 22, dans lequel au moins une partie (11, 12) est choisie de telle sorte que la composition chimique de celle-ci (11, 12) et/ou l'état métallurgique final de celle-ci (11, 12) confère des propriétés de résistance mécanique audit élément de structure, et au moins une autre partie (12, 11) adjacente est choisie de telle sorte que la composition chimique de celle-ci (12, 11) et/ou le revenu final de celle-ci (12, 11) confère une tolérance aux dommages audit élément de structure.

24. Procédé selon l'une quelconque des revendications 20 à 23, dans lequel au moins une partie (11, 12) est choisie de telle sorte que la composition chimique de celle-ci (11, 12) et/ou le revenu final de celle-ci (11, 12) confère une résistance mécanique audit élément de structure, et au moins une autre partie (12, 11) adjacente est choisie de telle sorte que la composition chimique de celle-ci (12, 11) et/ou le revenu final de celle-ci (12, 11) confère une résistance à la corrosion sous contrainte et/ou par exfoliation.

25. Procédé selon l'une quelconque des revendications 20 à 24, dans lequel lesdites parties (11, 12) sont soudées par soudage par friction-agitation.

26. Procédé selon l'une quelconque des revendications 20 à 25, dans lequel au moins deux desdites au moins deux parties (11, 12) sont en alliage 7XXX.

27. Procédé selon l'une quelconque des revendications 20 à 26, dans lequel au moins l'une desdites (11, 12) au moins deux parties (11, 12) est en alliage 2XXX et une autre (12, 11) desdites au moins deux parties est en alliage 7XXX.

28. Procédé selon l'une quelconque des revendications 26 à 27, dans lequel ledit alliage 7XXX est choisi dans le groupe constitué par 7040, 7349 et 7449.

29. Procédé selon l'une quelconque des revendications 26 à 28, dans lequel ladite partie en alliage 7XXX est pré-revenue.

30. Procédé selon l'une quelconque des revendications 27 à 29, dans lequel ladite partie en alliage 2XXX est pré-revenue.

31. Procédé selon l'une quelconque des revendications 27 à 30, dans lequel la partie en alliage 2XXX est placée côté avance.

32. Procédé selon l'une quelconque des revendications 26 à 30, dans lequel la partie en alliage 7XXX ayant la résistance à la rupture la plus élevée est placée côté avance.

33. Procédé selon l'une quelconque des revendications 20 à 32, dans lequel la température la plus élevée de revenu post-soudage est comprise entre 150 et 200° C.

34. Procédé selon l'une quelconque des revendications 20 à 32, dans lequel la température la plus élevée de revenu post-soudage est comprise entre 110 et 180 °C.

35. Procédé selon l'une quelconque des revendications 20 à 34, dans lequel la température la plus élevée de revenu post-soudage est comprise entre 170 et 180 °C.

36. Procédé selon l'une quelconque des revendications 20 à 32 ou 34, dans lequel la température la plus élevée de revenu post-soudage est comprise entre 140 et 160 °C.

37. Procédé selon l'une quelconque des revendications 20 à 36, dans lequel ledit élément de structure comprend un longeron ou une nervure appropriée pour une utilisation dans la construction aéronautique.

38. Procédé selon l'une quelconque des revendications 20 à 37, dans lequel ledit élément de structure comprend au moins une partie supérieure et une partie inférieure, dans lequel ladite partie supérieure comprend du 7449 T79 ou du T449 T7951 et ladite partie inférieure comprend du 7040 T76 ou du 7040 T7651 dans l'état métallurgique final.

## Claims

1. A structural member comprising at least two aluminum alloy parts (11, 12) displaying different property balances, said at least two parts being welded and wherein one of said parts is selected from an initial temper different from the other of said at least two parts, and
wherein at least one of said at least two parts (11, 12) has been pre-aged prior to being welded, and,
wherein said structural member has undergone a post-welding thermal treatment conferring a different final temper as it is the result of the pre-aging and of the post welding thermal treatment to each of said at least two parts.

2. A structural member as claimed in claim 1, wherein said at least two parts (11, 12) are adjacent.

3. A structural member as claimed in claim 1 or 2, wherein said different property balances between said at least two parts are achieved by virtue of at least one of (i) the chemical composition of said parts, (ii) the initial tempers of said parts, and/or (iii) the post-welding thermal treatment.

4. A structural member according to any of claims 1 to 3, wherein at least one part (11, 12) is selected such that the chemical composition thereof (11, 12) and/or the final temper thereof (11, 12) imparts strength properties to said structural member, and at least another adjacent part (12, 11) is selected such that the chemical composition thereof (12, 11) and/or the final temper thereof (12, 11) provides damage tolerance to said structural member.

5. A structural member according to any of claims 1 to 4, wherein at least one part (11, 12) is selected such that the chemical composition thereof (11, 12) and/or the final temper thereof (11, 12) imparts strength to said structural member, and at least another adjacent part (12, 11) is selected such that the chemical composition thereof (12, 11) and/or the final temper thereof (12, 11) provides resistance against stress and/or exfoliation corrosion.

6. A structural member according to any of claims 1 to 5, wherein said parts (11, 12) are welded by friction stir welding (11, 12).

7. A structural member according to any of claims 1 to 6, wherein at least two of said at least two parts (11, 12) comprise a 7XXX alloy part.

8. A structural member according to any of claims 1 to 7, wherein at least one of said at least two parts (11, 12) comprises a 2XXX alloy part and another of said at least two parts comprises a 7XXX alloy part.

9. A structural member according any of claims 7 to 8, wherein said 7XXX alloy is selected from the group consisting of 7040, 7349 and 7449.

10. A structural member according to any of claims 7 to 9 wherein said 7XXX alloy part is pre-aged.

11. A structural member according to any of claims 8 to 10 wherein said 2XXX alloy part is pre-aged.

12. A structural member according to any of claims 8 to 11, wherein the 2XXX alloy part is placed in the advancing side.

13. A structural member according to any of claim 7 to 11 wherein the 7XXX alloy part with the highest ultimate tensile strength is placed in the advancing side.

14. A structural member according to any of claims 1 to 13 wherein the post welding treatment highest temperature is comprised between 150 and 200°C.

15. A structural member according to any of claims 1 to 13 wherein the post welding treatment highest temperature is comprised between 110 and 180°C

16. A structural member according to any of claims 1 to15 wherein the post welding treatment highest temperature is comprised between 170 and 180°C.

17. A structural member according to any of claims 1 to 13 or 15 wherein the post welding treatment highest temperature is comprised between 140 and 160°C.

18. A structural member according to any of claims 1 to 17, wherein said structural member comprises a spar or a rib suitable for use in aircraft construction.

19. A structural member according to any of claims 1 to 18, wherein said structural member includes at least an upper part and a lower part, wherein said upper part comprises 7449 T79 or 7449 T7951 and said lower part comprises 7040 T76 or 7040 T7651 in the final temper.

20. A method for manufacturing a structural member comprising at least two aluminum alloy parts displaying different property balances, said at least two parts being welded and wherein one of said parts (11, 12) is selected from an initial temper different from the other(12, 11) of said at least two parts (11, 12), and
wherein at least one of said at least two parts (11, 12) has been pre-aged prior to being welded, and,
wherein said structural member has undergone a post-welding thermal treatment conferring a different final temper as it is the result of the pre-aging and of the post welding thermal treatment to each of said at least two parts.

21. A method according to claim 20, wherein said at least two parts (11, 12) are adjacent.

22. A method of claim 20 or 21, wherein said different property balances between said at least two parts are achieved by virtue of at least one of (i) the chemical composition of said parts, (ii) the initial tempers of said parts, and/or (iii) the post-welding thermal treatment.

23. A method according to any of claims 20 to 22, wherein at least one part (11, 12) is selected such that the chemical composition thereof (11, 12) and/or the final temper thereof (11, 12) imparts strength properties to said structural member, and at least another adjacent part (12, 11) is selected such that the chemical composition thereof (12, 11) and/or the final temper thereof (12, 11) provides damage tolerance to said structural member.

24. A method according to any of claims 20 to 23, wherein at least one part (11, 12) is selected such that the chemical composition thereof (11, 12) and/or the final temper thereof (11, 12) imparts strength to said structural member, and at least another adjacent part (12, 11) is selected such that the chemical composition thereof (12, 11) and/or the final temper thereof (12, 11) provides resistance against stress and/or exfoliation corrosion.

25. A method according to any of claims 20 to 24, wherein said parts (11, 12) are welded by friction stir welding.

26. A method according to any of claims 20 to 25, wherein at least two of said at least two parts (11, 12) comprise a 7XXX alloy.

27. A method according to any of claims 20 to 26, wherein at least one (11, 12) of said at least two parts (11, 12) comprises a 2XXX alloy and another (12, 11) of said at least two parts comprises a 7XXX alloy.

28. A method according any of claims 26 to 27, wherein said 7XXX alloy is selected from the group consisting of 7040, 7349 and 7449.

29. A method according to any of claims 26 to 28 wherein said 7XXX alloy is pre-aged.

30. A method according to any of claims 27 to 29 wherein said 2XXX alloy part is pre-aged.

31. A method according to any of claims 27 to 30, wherein the 2XXX alloy part is placed in the advancing side.

32. A method according to any of claim 26 to 30 wherein the 7XXX alloy part with the highest ultimate tensile strength is placed in the advancing side.

33. A method according to any of claims 20 to 32 wherein the post welding treatment highest temperature is comprised between 150 and 200°C.

34. A method according to any of claims 20 to 32 wherein the post welding treatment highest temperature is comprised between 110 and 180°C

35. A method according to any of claims 20 to34 wherein the post welding treatment highest temperature is comprised between 170 and 180°C.

36. A method according to any of claims 20 to 32 or 34 wherein the post welding treatment highest temperature is comprised between 140 and 160°C.

37. A method according to any of claims 20 to 36, wherein said structural member comprises a spar or a rib suitable for use in aircraft construction.

38. A method according to any of claims 20 to 37, wherein said structural member includes at least an upper part and a lower part, wherein said upper part comprises 7449 T79 or 7449 T7951 and said lower part comprises 7040 T76 or 7040 T7651 in the final temper.

## Patentansprüche

1. Strukturelement umfassend mindestens zwei Teile (11, 12) aus Aluminiumlegierung mit unterschiedlichen Eigenschaftskompromissen, wobei die mindestens zwei Teile verschweißt sind und bei dem für eines der Teile ein gegenüber dem anderen der mindestens zwei Teile unterschiedlicher Werkstoffausgangszustand gewählt ist, und
bei dem mindestens eines der mindestens zwei Teile (11, 12) vor dem Verschweißen vorausgelagert wurde, und
wobei das Strukturelement einer Auslagerung nach dem Verschweißen unterworfen wurde, wodurch jedem der mindestens zwei Teile ein unterschiedlicher Werkstoffendzustand verliehen wird, so wie er sich aus der Vorauslagerung und der Auslagerung nach dem Verschweißen ergibt.

2. Strukturelement nach Anspruch 1, bei dem die mindestens zwei Teile (11, 12) aneinander grenzen.

3. Strukturelement nach Anspruch 1 oder 2, bei dem die unterschiedlichen Eigenschaftskompromisse zwischen den mindestens zwei Teilen aufgrund mindestens eines der folgenden Merkmale erzielt werden: (i) chemische Zusammensetzung der Teile, (ii) Werkstoffausgangszustände der Teile und/oder (iii) Auslagerung nach dem Verschweißen.

4. Strukturelement nach irgendeinem der Ansprüche 1 bis 3, bei dem mindestens ein Teil (11, 12) so gewählt ist, dass die chemische Zusammensetzung dieses Teils (11, 12) und/oder der Werkstoffendzustand dieses Teils (11, 12) dem Strukturelement Festigkeitseigenschaften verleiht, und mindestens ein anderes angrenzendes Teil (12, 11) so gewählt ist, dass die chemische Zusammensetzung dieses Teils (12, 11) und/oder die Endauslagerung dieses Teils (12, 11) dem Strukturelement Schadenstoleranz verleiht.

5. Strukturelement nach irgendeinem der Ansprüche 1 bis 4, bei dem mindestens ein Teil (11, 12) so gewählt ist, dass die chemische Zusammensetzung dieses Teils (11, 12) und/oder die Endauslagerung dieses Teils (11, 12) dem Strukturelement mechanische Festigkeit verleiht, und mindestens ein anderes angrenzendes Teil (12, 11) so gewählt ist, dass die chemische Zusammensetzung dieses Teils (12, 11) und/oder die Endauslagerung dieses Teils (12, 11) Festigkeit gegen Spannungsriss- und/oder Schichtkorrosion verleiht.

6. Strukturelement nach irgendeinem der Ansprüche 1 bis 5, bei dem die Teile (11, 12) durch Reibrührschweißen verschweißt sind.

7. Strukturelement nach irgendeinem der Ansprüche 1 bis 6, bei dem mindestens zwei der mindestens zwei Teile (11, 12) aus der Legierung 7xxx sind.

8. Strukturelement nach irgendeinem der Ansprüche 1 bis 7, bei dem mindestens eines der mindestens zwei Teile (11, 12) aus der Legierung 2xxx ist und ein anderes der mindestens zwei Teile aus der Legierung 7xxx ist.

9. Strukturelement nach irgendeinem der Ansprüche 7 bis 8, bei dem die Legierung 7xxx aus der Gruppe bestehend aus 7040, 7349 und 7449 gewählt ist.

10. Strukturelement nach irgendeinem der Ansprüche 7 bis 9, bei dem das Teil aus der Legierung 7xxx vorausgelagert ist.

11. Strukturelement nach irgendeinem der Ansprüche 8 bis 10, bei dem das Teil aus der Legierung 2xxx vorausgelagert ist.

12. Strukturelement nach irgendeinem der Ansprüche 8 bis 11, bei dem das Teil aus der Legierung 2xxx auf der Vorschubseite angeordnet ist.

13. Strukturelement nach irgendeinem der Ansprüche 7 bis 11, bei dem das Teil aus der Legierung 7xxx mit der höchsten Bruchfestigkeit auf der Vorschubseite angeordnet ist.

14. Strukturelement nach irgendeinem der Ansprüche 1 bis 13, bei dem die höchste Auslagerungstemperatur nach dem Verschweißen im Bereich zwischen 150 und 200 °C liegt.

15. Strukturelement nach irgendeinem der Ansprüche 1 bis 13, bei dem die höchste Auslagerungstemperatur nach dem Verschweißen im Bereich zwischen 110 und 180 °C liegt.

16. Strukturelement nach irgendeinem der Ansprüche 1 bis 15, bei dem die höchste Auslagerungstemperatur nach dem Verschweißen im Bereich zwischen 170 und 180 °C liegt.

17. Strukturelement nach irgendeinem der Ansprüche 1 bis 13 oder 15, bei dem die höchste Auslagerungstemperatur nach dem Verschweißen im Bereich zwischen 140 und 160 °C liegt.

18. Strukturelement nach irgendeinem der Ansprüche 1 bis 17, wobei das Strukturelement aus einem für einen Einsatz im Flugzeugbau geeigneten Holm oder einer ebensolche Rippe besteht.

19. Strukturelement nach irgendeinem der Ansprüche 1 bis 18, wobei das Strukturelement mindestens ein Oberteil und ein Unterteil umfasst, wobei das Oberteil 7449 T79 oder 7449 T7951, das Unterteil 7040 T76 oder 7040 T7651 jeweils im Werkstoffendzustand enthält.

20. Verfahren zur Herstellung eines Strukturelementes umfassend mindestens zwei Teile (11, 12) aus Aluminiumlegierung mit unterschiedlichen Eigenschaftskompromissen, wobei die mindestens zwei Teile verschweißt werden und bei dem für eines der Teile (11, 12) ein gegenüber dem anderen (12,11) der mindestens zwei Teile (11, 12) unterschiedlicher Werkstoffausgangszustand gewählt wird, und
bei dem mindestens eines der mindestens zwei Teile (11, 12) vor dem Verschweißen vorausgelagert wurde, und
bei dem das Strukturelement einer Auslagerung nach dem Verschweißen unterworfen wurde, wodurch jedem der mindestens zwei Teile ein unterschiedlicher Werkstoffendzustand verliehen wird, so wie er sich aus der Vorauslagerung und der Auslagerung nach dem Verschweißen ergibt.

21. Verfahren nach Anspruch 20, bei dem die mindestens zwei Teile (11, 12) aneinander grenzen.

22. Verfahren nach Anspruch 20 oder 21, bei dem die unterschiedlichen Eigenschaftskompromisse zwischen den mindestens zwei Teilen aufgrund mindestens eines der folgenden Merkmale erzielt werden: (i) chemische Zusammensetzung der Teile, (ii) Werkstoffausgangszustände der Teile und/oder (iii) Auslagerung nach dem Verschweißen.

23. Verfahren nach irgendeinem der Ansprüche 20 bis 22, bei dem mindestens ein Teil (11, 12) so gewählt wird, dass die chemische Zusammensetzung dieses Teils (11,12) und/oder der Werkstoffendzustand dieses Teils (11, 12) dem Strukturelement Festigkeitseigenschaften verleiht, und mindestens ein anderes angrenzendes Teil (12, 11) so gewählt wird, dass die chemische Zusammensetzung dieses Teils (12,11) und/oder die Endauslagerung dieses Teils (12, 11) dem Strukturelement Schadenstoleranz verleiht.

24. Verfahren nach irgendeinem der Ansprüche 20 bis 23, bei dem mindestens ein Teil (11, 12) so gewählt wird, dass die chemische Zusammensetzung dieses Teils (11, 12) und/oder die Endauslagerung dieses Teils (11, 12) dem Strukturelement mechanische Festigkeit verleiht, und mindestens ein anderes angrenzendes Teil (12, 11) so gewählt wird, dass die chemische Zusammensetzung dieses Teils (12, 11) und/oder die Endauslagerung dieses Teils (12, 11) Festigkeit gegen Spannungsriss- und/oder Schichtkorrosion verleiht.

25. Verfahren nach irgendeinem der Ansprüche 20 bis 24, bei dem die Teile (11, 12) durch Reibrührschweißen verschweißt werden.

26. Verfahren nach irgendeinem der Ansprüche 20 bis 25, bei dem mindestens zwei der mindestens zwei Teile (11, 12) aus der Legierung 7xxx sind.

27. Verfahren nach irgendeinem der Ansprüche 20 bis 26, bei dem mindestens eines der mindestens zwei Teile (11, 12) aus der Legierung 2xxx ist und ein anderes (12, 11) der mindestens zwei Teile aus der Legierung 7xxx ist.

28. Verfahren nach irgendeinem der Ansprüche 26 bis 27, bei dem die Legierung 7xxx aus der Gruppe bestehend aus 7040, 7349 und 7449 gewählt wird.

29. Verfahren nach irgendeinem der Ansprüche 26 bis 28, bei dem das Teil aus der Legierung 7xxx vorausgelagert wird.

30. Verfahren nach irgendeinem der Ansprüche 27 bis 29, bei dem das Teil aus der Legierung 2xxx vorausgelagert wird.

31. Verfahren nach irgendeinem der Ansprüche 27 bis 30, bei dem das Teil aus der Legierung 2xxx auf der Vorschubseite angeordnet wird.

32. Verfahren nach irgendeinem der Ansprüche 26 bis 30, bei dem das Teil aus der Legierung 7xxx mit der höchsten Bruchfestigkeit auf der Vorschubseite angeordnet wird.

33. Verfahren nach irgendeinem der Ansprüche 20 bis 32, bei dem die höchste Auslagerungstemperatur nach dem Verschweißen im Bereich zwischen 150 und 200 °C liegt.

34. Verfahren nach irgendeinem der Ansprüche 20 bis 32, bei dem die höchste Auslagerungstemperatur nach dem Verschweißen im Bereich zwischen 110 und 180 °C liegt.

35. Verfahren nach irgendeinem der Ansprüche 20 bis 34, bei dem die höchste Auslagerungstemperatur nach dem Verschweißen im Bereich zwischen 170 und 180 °C liegt.

36. Verfahren nach irgendeinem der Ansprüche 20 bis 32 oder 34, bei dem die höchste Auslagerungstemperatur nach dem Verschweißen im Bereich zwischen 140 und 160 °C liegt.

37. Verfahren nach irgendeinem der Ansprüche 20 bis 36, bei dem das Strukturelement aus einem für einen Einsatz im Flugzeugbau geeigneten Holm oder einer ebensolchen Rippe besteht.

38. Verfahren nach irgendeinem der Ansprüche 20 bis 37, bei dem das Strukturelement mindestens ein Oberteil und ein Unterteil umfasst, wobei das Oberteil 7449 T79 oder 7449 T7951, das Unterteil 7040 T76 oder 7040 T7651 jeweils im Werkstoffendzustand enthält.
